# EUROPÄISCHE PATENTSCHRIFT

(11) **EP 3 917 827 B1**
(45) Veröffentlichungstag und Bekanntmachung des Hinweises auf die Patenterteilung: **23.04.2025**
(21) Anmeldenummer: 20701451.5
(22) Anmeldetag: 21.01.2020
(51) Int. Cl.: B63G 8/39, G01S 7/521, G10K 11/00

(54) **VORRICHTUNG ZUM VERKLEIDEN EINES UNTERWASSERSCHALLEMPFÄNGERS**
DEVICE FOR CLADDING AN UNDERWATER SOUND RECEIVER
DISPOSITIF D'HABILLAGE D'UN RÉCEPTEUR DE SONS SOUS-MARINS

(30) Priorität: 31.01.2019 DE 102019201282
(43) Veröffentlichungstag der Anmeldung: 08.12.2021
(73) Patentinhaber: ATLAS ELEKTRONIK GmbH, 28309 Bremen (DE); thyssenkrupp AG, 45143 Essen (DE)
(72) Erfinder: HOFFMANN, Christoph, 27777 Ganderkesee (DE)
(74) Vertreter: thyssenkrupp Intellectual Property GmbH
(86) Internationale Anmeldenummer: PCT/EP2020/051368
(87) Internationale Veröffentlichungsnummer: WO 2020/156878

(56) Entgegenhaltungen:
- CA-A- 989 254
- GB-A- 1 205 921
- US-A- 4 114 137
- US-B1- 6 172 940

## Beschreibung

Die Erfindung bezieht sich auf eine Vorrichtung, die Sonarantennen umschließt, um die Strömungseigenschaften eines Unterwasserfahrzeugs, an dem die Vorrichtung montiert ist, im Vergleich zu einem Unterwasserfahrzeug, an dem die Sonarantennen ohne die Vorrichtung montiert sind, zu verbessern.

Unterwasserfahrzeuge weisen typischerweise Sonarantennen auf, damit sie ihre Umgebung wahrnehmen können. Die Sonarantennen können jedoch nicht innerhalb der Hülle des Unterwasserfahrzeugs angebracht werden, da sie dort die Schallwellen im Wasser nicht detektieren können. Werden die Sonarantennen außerhalb des Unterwasserfahrzeugs angeordnet, haben die Unterwasserantennen jedoch einen negativen Einfluss auf die Strömungseigenschaften des Unterwasserfahrzeugs. Um diese Strömungseigenschaften zu verbessern, können die Unterwasserantennen verkleidet, also mit einer Hülle umspannt, werden. Diese Hülle absorbiert jedoch entweder zu viel Schall oder sie kann dem dynamischen Wasserdruck, der durch Wellengang auf die Hülle wirken kann, wenn das Unterwasserfahrzeug an der Wasseroberfläche fährt, nicht standhalten.

US 4,114,137 A offenbart eine Sonoboje mit einem gerichteten Hydrophon, das zentral in einem flexiblen, akustisch transparenten, kugelförmigen Beutel eingeschlossen ist, der nach dem Ausbringen mit Wasser gefüllt wird, um eine Hydrosphäre zu bilden.

US 6,172,940 B1 offenbart eine Unterwassersonde die zur Messung der akustischen Intensität aus zwei passiven Geophonen besteht, die mit Abstand zueinander und den ausgerichteten Sensorachsen montiert sind.

CA 9 892 54 A offenbart ein verbessertes System zur Unterwassersignalisierung mit einer Kombination aus der Hülle eines Schiffs und einer wasserdichten Kammer in der Hülle, die an ihrer Unterseite geöffnet ist.

GB 1 205 921 A offenbart ein akustisches Fenster zur Verwendung in einem flüssigen Medium, um die Ausbreitung von akustischen Signalen durch das Fenster zu ermöglichen und die Wandler auf einer Seite des Fensters vor den unerwünschten Auswirkungen von Flüssigkeitsbewegungen und anderen physikalischen Störungen auf der anderen Seite des Fensters zu schützen.

Die Aufgabe der vorliegenden Erfindung besteht deshalb darin, ein verbessertes Konzept für das Anbringen von Unterwasserschallempfängern an einem Unterwasserfahrzeug zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen ein Unterwasserfahrzeug umfassend eine Außenhülle, die im Betrieb des Unterwasserfahrzeugs zumindest teilweise von Wasser umgeben ist und eine Vorrichtung zum Verkleiden eines Unterwasserschallempfängers, beispielsweise einer (Sonar-) Antenne, des Unterwasserfahrzeugs. Die Vorrichtung umfasst eine Hülle, ein Ventil und eine Auslassöffnung. Die Hülle kann den Unterwasserschallempfänger aufnehmen. Ferner weist die Hülle in einem ersten Bereich ein (akustisches) Fenster auf, wobei das Fenster ausgebildet ist, Schallwellen passieren zu lassen. Die Hülle ist wasserdicht mit der Außenhülle verbunden. So kann die Hülle der Vorrichtung auf die Außenhülle aufgesetzt sein, so dass die Hülle und die Außenhülle einen Raum bilden, in dem der Unterwasserschallempfänger angeordnet wird. Befindet sich Wasser in der Hülle, kann sich das Wasser demnach auch zwischen der Hülle und der Außenhülle befinden. Die Vorrichtung kann in (Haupt-) Fahrtrichtung des Unterwasserfahrzeugs vorne, d.h. an der Stirnseite bzw. am Bug angebracht sein.

Das Ventil ist ausgebildet, die Vorrichtung umgebendes Wasser in die Hülle hineinströmen zu lassen und in der Hülle vorhandenes Wasser am Ausströmen aus der Hülle, insbesondere bei vertikalen Bewegungen des Unterwasserfahrzeugs wenn sich dieses beispielsweise an der Oberfläche befindet, zu hindern. Die Auslassöffnung ist ausgebildet in der Hülle vorhandenes Wasser ausströmen zu lassen, so dass durch den bei der Fahrt des Unterwasserfahrzeugs auftretenden, im Vergleich zu dem hydrostatischen Druck in der Hülle, höheren Druck außerhalb der Hülle, ein Wasseraustausch in der Hülle stattfindet.

Die Idee umfasst mehrere zusammenwirkende Aspekte. Zunächst können die Schallwellen aus dem die Hülle umgebenden Wasser durch das Fenster in den Innenraum der Hülle gelangen und dort von dem Unterwasserschallempfänger detektiert werden. Hierzu ist es jedoch vorteilhaft, wenn das Fenster möglichst dünn ist, um möglichst wenig Schall zu absorbieren, bzw. die Schallwellen zu dämpfen. Die restliche Hülle kann dann stabiler gefertigt sein. Damit die Schallwellen auch innerhalb der Hülle möglichst ungedämpft zu dem Unterwasserschallempfänger gelangen, ist die Hülle mit Wasser gefüllt. Durch den dann vorhandenen statischen Innendruck in der Hülle durch das inkompressible Wasser kann die Hülle und insbesondere auch das Fenster dem dynamischen Wasserdruck von Wellen besser standhalten. Bewegt sich das Unterwasserfahrzeug vorwärts ist es ferner vorteilhaft, wenn sich das Wasser in der Hülle austauscht, so dass innerhalb und außerhalb der Hülle "das gleiche" Wasser vorliegt. So können sich die Eigenschaften (z.B. Salzgehalt, Temperatur) des Wassers bereits an zwei dicht benachbarten Stellen derart unterscheiden, dass sich auch die Schallgeschwindigkeit in dem Wasser ändert. Hierdurch können unerwünschte Grenzschichten entstehen, die die Schallausbreitung negativ beeinflussen. Das Ventil sorgt nun dafür, dass durch den bei der Fahrt des Unterwasserfahrzeugs auftretenden, im Vergleich zu dem hydrostatischen Druck in der Hülle, höheren Druck außerhalb der Hülle (Staudruck), ein Wasseraustausch in der Hülle stattfindet. Überschüssiges Wasser in der Hülle kann durch das Auslassventil ausströmen. In anderen Worten wird bei einem fahrenden Unterwasserfahrzeug das Wasser innerhalb der Hülle ständig durchmischt bzw. ausgetauscht, wohingegen bei einem im Wesentlichen auf der Stelle stehenden Unterwasserfahrzeug das Austreten von Wasser aus der Hülle durch das Ventil als auch das Auslassventil weitestgehend vermieden wird. Somit bleibt der Druck innerhalb der Hülle konstant. Der Austausch funktioniert sowohl wenn das Unterwasserfahrzeug aufgetaucht ist, als auch wenn das Unterwasserfahrzeug getaucht ist.

Damit das Fenster Schallwellen passieren lassen kann, kann das Fenster ein erstes Material aufweisen, das sich von einem zweiten Material der Hülle unterscheiden. So kann das zweite Material in einem zweiten Bereich der Hülle, der außerhalb des ersten Bereichs liegt, in dem das Fenster angeordnet ist, ohne Rücksichtnahme auf die Schalltransmissionseigenschaften ausgewählt werden. Es kann daher ein dem Wasserdruck, insbesondere dem dynamischen Wasserdruck von Wellengang, widerstehendes Material, beispielsweise glasfaserverstärkter Kunststoff (GFK) oder ein Metall (z.B. Eisen), verwendet werden. Das erste Material wird ferner derart ausgewählt, dass es die Schallwellen möglichst gut transmittiert, d.h. möglichst wenig dämpft, insbesondere eine bessere Schalltransmission ermöglicht als das zweite Material. So kann für das erste Material beispielsweise ein Kunststoff mit einer Schallgeschwindigkeit ähnlich von Seewasser verwendet werden, wobei ein Kunststoff exakt mit einer Schallgeschwindigkeit von Seewasser die besten Transmissionseigenschaften der genannten Materialien aufweist.

In anderen Worten kann als erstes Material ein faserverstärkter Kunststoff, beispielsweise aus der Gruppe der Duromere oder ein, insbesondere faserverstärkter, thermoplastischer Kunststoff verwendet werden. Das Fenster kann jedoch auch eine Kombination von mehreren Schichten der vorgenannten Materialien umfassen. Zwischen den Schichten können (mechanisch) eine oder mehrere Zwischenlagen eines dämpfenden Materials, beispielsweise eine viskoelastische Folie oder ein Gummi-Werkstoff, eingefügt werden. In Abhängigkeit der Verwendung der Vorrichtung kann das Material derart ausgewählt werden, dass es den Transmissionseigenschaften des (See-) Wassers in dem vorgesehenen Verwendungsgebiet entspricht oder diesem zumindest angenähert ist.

Ausführungsbeispiele zeigen, dass das Ventil ausgebildet ist, das die Vorrichtung umgebende Wasser in die Hülle hineinströmen zu lassen, wenn der Wasserdruck des die Vorrichtung umgebenden Wassers größer ist als der Wasserdruck in der Hülle und das in der Hülle vorhandene Wasser am Ausströmen aus der Hülle zu hindern, wenn der Wasserdruck des umgebenden Wassers geringer ist als der Wasserdruck des Wassers in der Hülle. In anderen Worten kann es sich bei dem Ventil um ein Rückschlagventil handeln. Dies ist eine mögliche Ausgestaltung, um den Wasseraustausch innerhalb der Hülle zu ermöglichen und gleichzeitig zu gewährleisten, dass kein Wasser aus der Hülle abfließt wenn kein neues Wasser nachkommt. Der Wasserdruck des die Vorrichtung umgebenden Wassers ist insbesondere auch dann geringer, wenn sich das Ventil im aufgetauchten Zustand des Unterwasserfahrzeugs, an dem die Vorrichtung angebracht ist, oberhalb der Wasserlinie befindet.

Ausführungsbeispiele zeigen, dass das Fenster ein erstes Material mit einer geringeren Materialdicke aufweist als die Hülle in einem zweiten Bereich außerhalb des ersten Bereichs, in dem das Fenster angeordnet ist. Somit kann das Fenster akustisch durchlässig sein, um die Schallwellen passieren zu lassen. Damit das Fenster akustisch durchlässig ist, ist es neben einer geeigneten Materialwahl vorteilhaft, das Fenster möglichst dünn zu halten.

In weiteren Ausführungsbeispielen weist das Fenster eine Fläche von weniger als 40%, weniger als 30% oder weniger als 20% aber mehr als 5% der Gesamtoberfläche der Hülle auf. Somit ist nur ein kleiner aber ausreichend großer Teil der Hülle aus einem wenig widerstandsfähigen Material gefertigt, so dass die Bruchwahrscheinlichkeit des Fensters weiter reduziert ist.

In weiteren Ausführungsbeispielen weist die Hülle ein weiteres Fenster auf. Das weitere Fenster kann die gleichen Merkmale aufweisen wie das Fenster. Somit ist es möglich, hinter dem weiteren Fenster einen weiteren Unterwasserschallempfänger anzuordnen.

Ausführungsbeispiele zeigen, dass die Auslassöffnung in Verwendungsorientierung der Vorrichtung an einer Oberseite der Hülle angeordnet ist. So kann das Wasser innerhalb der Hülle nur ausgetauscht werden, wenn durch das Ventil neues Wasser in die Hülle hineinfließt. Der hydrostatische Druck innerhalb der Hülle bleibt somit unabhängig von der aktuellen Position der Vorrichtung konstant.

Weitere Ausführungsbeispiele zeigen das Unterwasserfahrzeug mit einem System umfassend die Vorrichtung und den Unterwasserschallempfänger, wobei der Unterwasserschallempfänger derart in der Hülle angeordnet ist, dass Schallwellen aus dem die Vorrichtung umgebenden Wasser durch das Fenster von dem Unterwasserschallempfänger empfangbar sind. Weist die Hülle ein weiteres Fenster auf kann ein weiterer Unterwasserschallempfänger derart in der Hülle angeordnet sein, dass Schallwellen aus dem die Vorrichtung umgebenden Wasser durch das weitere Fenster von dem weiteren Unterwasserschallempfänger empfangbar sind.

In Ausführungsbeispielen des Unterwasserfahrzeugs ist das Ventil derart angeordnet ist, dass sich dieses im Betrieb des Unterwasserfahrzeugs überwiegend unterhalb der Wasseroberfläche befindet. Überwiegend meint hier, dass sich das Unterwasserfahrzeug, wenn es aufgetaucht ist, also beim Fahren auf dem Wasser, abhängig vom Wellengang auch mal aus dem Wasser heben kann, so dass das Ventil dann oberhalb der Wasseroberfläche liegt. In ruhigem Wasser liegt das Ventil jedoch unterhalb der Wasseroberfläche um den Wasseraustausch in der Hülle zu ermöglichen.

Bevorzugte Ausführungsbeispiele der vorliegenden Erfindung werden nachfolgend Bezug nehmend auf die beiliegenden Zeichnungen erläutert. Es zeigen:
Fig. 1: eine schematische Darstellung einer Vorrichtung zum Verkleiden eines Unterwasserempfängers, optional ein System mit der Vorrichtung und weiter optional ein Unterwasserfahrzeug mit der Vorrichtung, wobei hier genau ein Unterwasserempfänger gezeigt ist; und
Fig. 2: eine schematische Darstellung der Vorrichtung zum Verkleiden von zwei Unterwasserempfängern, optional das System mit der Vorrichtung und weiter optional das Unterwasserfahrzeug mit der Vorrichtung.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

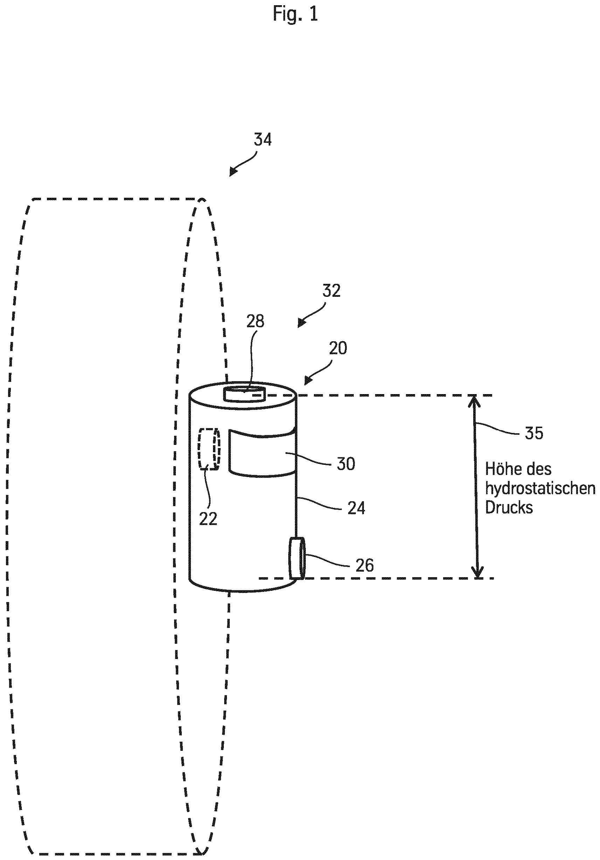

Fig. 1 zeigt eine schematische Darstellung einer Vorrichtung 20 zum Verkleiden eines Unterwasserschallempfängers 22. Die Verrichtung 20 umfasst eine Hülle 24, ein Ventil 26 und eine Auslassöffnung 28. Die Hülle 24 kann den Unterwasserschallempfänger 22 aufnehmen. Die Vorrichtung in Kombination mit dem Unterwasserempfänger 22 wird auch als System 32 bezeichnet. Die Hülle 24 weist in einem ersten Bereich ein Fenster 30 auf, wobei das Fenster ausgebildet ist, Schallwellen aus der Umgebung der Vorrichtung in das Innere der Vorrichtung, insbesondere zu dem Unterwasserschallempfänger 22, passieren zu lassen. Die Hülle 24 kann eine Form aufweisen, die, wenn die Vorrichtung 20 an ein Unterwasserfahrzeug 34, insbesondere die Außenhülle 40 desselben, angebracht ist, die Strömungseigenschaften des Unterwasserfahrzeug weniger beeinflusst, als das bloße Anbringen des Unterwasserschallempfängers 22 an dem Unterwasserfahrzeug 34. Insbesondere kann die Hülle 24 an die Form des Unterwasserfahrzeugs 34 angepasst werden um die Strömungseigenschaften des Unterwasserfahrzeugs 34 möglichst wenig zu beeinflussen.

Das Ventil 26 kann die Vorrichtung 20 umgebendes Wasser in die Hülle 24 hineinströmen lassen. Somit ist gewährleistet, dass der Bereich zwischen dem Unterwasserempfänger 22 und dem Fenster 30 mit Wasser geflutet ist, sodass die Schallwellen, die das Fenster 30 passieren auch zu dem Unterwasserempfänger 22 gelangen können. Ferner ist das Ventil 26 ausgebildet, in der Hülle vorhandenes Wasser am Ausströmen aus der Hülle 24 durch das Ventil 26 zu hindern. Somit bleibt das in der Hülle 24 vorhandene Wasser auch dann in der Hülle, wenn der Wasserdruck außerhalb der Vorrichtung geringer wird als der Wasserdruck durch das Wasser in der Hülle 24. Dies kann beispielsweise im Stillstand des Unterwasserfahrzeug 34 oder wenn sich das Unterwasserfahrzeug beispielsweise durch Wellengang aus dem Wasser hebt, geschehen. Das Ventil 26 kann wie hier gezeigt direkt in der Hülle 24 angeordnet seien oder beispielsweise auch in einem Schlauch, der die Wasserzufuhr in die Hülle 24 ermöglicht.

Um jedoch den Austausch des Wassers in der Hülle 24 zu ermöglichen, weist die Vorrichtung 20 eine Auslassöffnung 28, beispielsweise einen Überlauf, auf. Dringt Wasser durch das Ventil 26 in die Hülle 24 ein, und ist die Hülle 24 bereits mit Wasser geflutet, so wird überschüssiges Wasser durch die Auslassöffnung 28 aus der Hülle 24 herausgepresst. Somit ist gewährleistet, dass das Wasser in der Hülle im Wesentlichen die gleiche Zusammensetzung aufweist, wie das die Hülle umgebende Wasser. Dies ermöglicht eine möglichst homogene Ausbreitung der Schallwellen aus dem die Vorrichtung umgebenden Wasser durch das Fenster 30 und das Wasser in der Hülle 24 zu dem Unterwasserschallempfänger 22.

Der Doppelpfeil 35 zeigt die Höhe des hydrostatischen Drucks in der Hülle 24 an, insbesondere wenn die Auslassöffnung 28 oberhalb der Wasserlinie liegt. Ist das Ventil 26 unterhalb der Wasserlinie und bewegt sich die Vorrichtung 20, so wird ein Staudruck erzeugt, der größer als der hydrostatische Druck innerhalb der Hülle 24 ist. Somit entsteht auch bei einem aufgetauchten Unterwasserfahrzeug ein regelmäßiger Wasseraustausch in der Hülle 24, wenn sich das Unterwasserfahrzeug 34 bewegt. Steht das Unterwasserfahrzeug 34 jedoch, ist der Wasserdruck außerhalb der Vorrichtung geringer als der hydrostatische Druck innerhalb der Hülle 24, verhindert das Ventil 24 das Ablaufen des Wassers aus der Hülle.

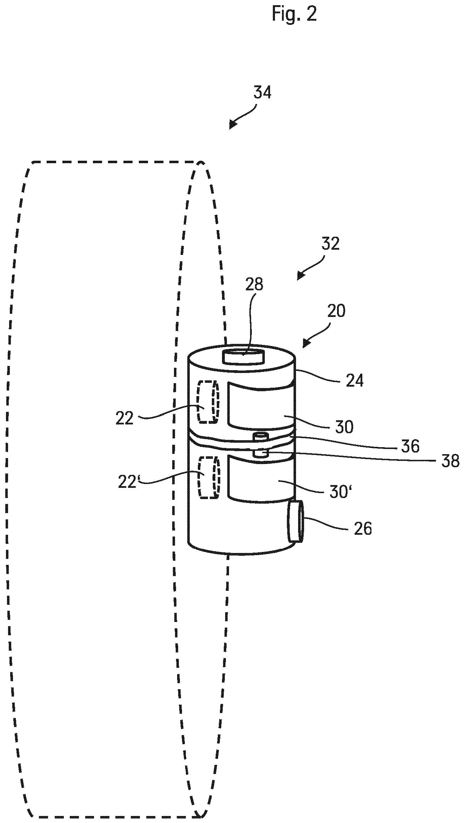

Fig. 2 zeigt eine schematische Darstellung einer Vorrichtung 20 zum Verkleiden von zwei Unterwasserschallempfängern 22, 22'. Ergänzend zu der Darstellung aus Fig. 1 weist die Vorrichtung 20 aus Fig. 2 ein weiteres Fenster 30' auf, hinter dem optional zur Bildung des Systems, ein weiterer Unterwasserschallempfänger 22' angeordnet werden kann. In diesem Fall weist die Vorrichtung 20 optional eines oder mehrere Trennelemente 36 auf, um für jeden Unterwasserschallempfänger 22, 22' eine eigene Kammer in der Hülle 24 zu bilden. Weist die Vorrichtung 20 zumindest zwei Trennelemente 36 auf, können diese eine weitere Kammer bilden, in der beispielsweise Auswerteelektronik zum Auswerten der Signale der Unterwasserschallempfänger 22, 22' eingebaut werden kann. Durch die Trennelemente 36 und optional die dazwischen liegende Kammer, kann das Wasser innerhalb der Hülle 24 aus der ersten Kammer mittels eines Verbindungselements 38, beispielsweise eines Schlauchs, in die zweite Kammer geführt werden. In diesem Fall ist es nicht notwendig, die Kammer zwischen den Trennelementen 36 ebenfalls zu fluten. Die erste Kammer kann dadurch gekennzeichnet sein, dass in dieser der Wasserzufluss durch das Ventil 26 angeordnet ist. Die zweite Kammer kann dadurch gekennzeichnet sein, dass hier der Wasserauslas durch die Auslassöffnung 28 angeordnet ist.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Vorrichtung
- 22: Unterwasserschallempfänger
- 24: Hülle
- 26: Ventil
- 28: Auslassöffnung
- 30: Fenster
- 32: System
- 34: Unterwasserfahrzeug
- 35: Doppelpfeil
- 36: Trennelement
- 38: Verbindungselement (Schlauch)
- 40: Außenhülle

## Patentansprüche

1. Unterwasserfahrzeug (34) umfassend eine Außenhülle, die im Betrieb des Unterwasserfahrzeugs zumindest teilweise von Wasser umgeben ist und eine Vorrichtung (20) zum Verkleiden eines Unterwasserschallempfängers (22) des Unterwasserfahrzeugs, wobei die Vorrichtung folgende Merkmale aufweist:
einer Hülle (24), zum Aufnehmen des Unterwasserschallempfängers (22), wobei die Hülle (24) in einem ersten Bereich ein Fenster (30) aufweist, wobei das Fenster (30) ausgebildet ist, Schallwellen passieren zu lassen, wobei die Hülle wasserdicht mit der Außenhülle verbunden ist;
einem Ventil (26), das ausgebildet ist, die Vorrichtung (20) umgebendes Wasser in die Hülle (24) hineinströmen zu lassen und in der Hülle (24) vorhandenes Wasser am Ausströmen aus der Hülle (24) zu hindern;
eine Auslassöffnung (28), die ausgebildet ist in der Hülle (24) vorhandenes Wasser ausströmen zu lassen, wenn Wasser durch das Ventil (26) einströmt;
so dass durch den bei der Fahrt des Unterwasserfahrzeugs auftretenden, im Vergleich zu dem hydrostatischen Druck in der Hülle, höheren Druck außerhalb der Hülle, ein Wasseraustausch in der Hülle stattfindet.

2. Unterwasserfahrzeug (34) gemäß Anspruch 1,
wobei das Ventil ausgebildet ist, die Vorrichtung umgebendes Wasser in die Hülle hineinströmen zu lassen, wenn der Wasserdruck des die Vorrichtung umgebenden Wassers größer ist als der Wasserdruck in der Hülle und das in der Hülle vorhandene Wasser am Ausströmen aus der Hülle zu hindern, wenn der Wasserdruck des umgebenden Wassers geringer ist als der Wasserdruck des Wassers in der Hülle.

3. Unterwasserfahrzeug (34) gemäß einem der vorherigen Ansprüche,
wobei das Fenster ein erstes Material mit einer geringeren Materialdicke aufweist als die Hülle in einem zweiten Bereich außerhalb des ersten Bereichs, in dem das Fenster angeordnet ist.

4. Unterwasserfahrzeug (34) gemäß einem der vorherigen Ansprüche,
wobei die Hülle in einem Bereich um das Fenster ein zweites Material aufweist, das ausgebildet ist, dem Wasserdruck des umgebenden Wassers stand zu halten.

5. Unterwasserfahrzeug (34) gemäß einem der vorherigen Ansprüche,
wobei das Ventil ein Rückschlagventil ist.

6. Unterwasserfahrzeug (34) gemäß einem der vorherigen Ansprüche,
wobei das Ventil ausgebildet ist, das Wasser in die Hülle hineinströmen zu lassen, wenn der Wasserdruck des die Hülle umgebenden Wassers größer ist als der Wasserdruck in der Hülle.

7. Unterwasserfahrzeug (34) gemäß einem der vorherigen Ansprüche,
wobei die Auslassöffnung in Verwendungsorientierung der Vorrichtung an einer Oberseite der Hülle angeordnet ist.

8. Unterwasserfahrzeug (34) gemäß einem der vorherigen Ansprüche,
wobei das Fenster weniger als 20% einer Gesamtoberfläche der Hülle einnimmt.

9. Unterwasserfahrzeug (34) gemäß einem der vorherigen Ansprüche,
wobei die Hülle ein weiteres Fenster aufweist.

10. Unterwasserfahrzeug (34) gemäß einem der vorherigen Ansprüche mit einem System (32) umfassend die Vorrichtung gemäß einem der vorherigen Ansprüche und den Unterwasserschallempfänger, wobei der Unterwasserschallempfänger derart in der Hülle angeordnet ist, dass Schallwellen aus dem die Vorrichtung umgebenden Wasser durch das Fenster von dem Unterwasserschallempfänger empfangbar sind.

11. Unterwasserfahrzeug (34) gemäß einem der vorherigen Ansprüche, wobei das Ventil derart angeordnet ist, dass sich dieses im Betrieb des Unterwasserfahrzeugs überwiegend unterhalb der Wasseroberfläche befindet.

## Claims

1. An underwater vehicle (34) comprising an outer hull which is at least partially surrounded by water during operation of the underwater vehicle and a device (20) for covering an underwater acoustic receiver (22) of the underwater vehicle, the device having the following features:
a casing (24) for accommodating the underwater sound receiver (22), the casing (24) having a window (30) in a first region, the window (30) being designed to allow sound waves to pass through, the casing being connected to the outer casing in a watertight manner;
a valve (26) which is designed to allow water surrounding the device (20) to flow into the envelope (24) and prevent water present in the envelope (24) from flowing out of the envelope (24);
an outlet opening (28) which is designed to allow water present in the casing (24) to flow out when water flows in through the valve (26);
so that the higher pressure outside the hull compared to the hydrostatic pressure inside the hull, which occurs when the underwater vehicle is moving, results in water exchange in the hull.

2. The underwater vehicle (34) according to claim 1,
wherein the valve is designed to allow water surrounding the device to flow into the envelope when the water pressure of the water surrounding the device is greater than the water pressure in the envelope and to prevent the water present in the envelope from flowing out of the envelope when the water pressure of the surrounding water is less than the water pressure of the water in the envelope.

3. The underwater vehicle (34) according to any of the preceding claims,
wherein the window has a first material with a lower material thickness than the envelope in a second region outside the first region in which the window is located.

4. The underwater vehicle (34) according to any of the preceding claims,
wherein the envelope has a second material in an area around the window which is designed to withstand the water pressure of the surrounding water.

5. The underwater vehicle (34) according to any of the preceding claims,
where the valve is a non-return valve.

6. The underwater vehicle (34) according to any of the preceding claims,
whereby the valve is designed to allow the water to flow into the envelope when the water pressure of the water surrounding the envelope is greater than the water pressure in the envelope.

7. The underwater vehicle (34) according to any of the preceding claims,
whereby the outlet opening is arranged on an upper side of the cover in the orientation of use of the device.

8. The underwater vehicle (34) according to any of the preceding claims,
where the window takes up less than 20% of the total surface area of the envelope.

9. The underwater vehicle (34) according to any of the preceding claims,
whereby the shell has an additional window.

10. The underwater vehicle (34) according to any of the preceding claims, comprising a system (32) comprising the device according to any of the preceding claims and the underwater sound receiver, wherein the underwater sound receiver is arranged in the hull such that sound waves from the water surrounding the device are receivable by the underwater sound receiver through the window.

11. The underwater vehicle (34) according to one of the preceding claims, wherein the valve is arranged in such a way that it is predominantly below the water surface during operation of the underwater vehicle.

## Revendications

1. Véhicule sous-marin (34) comprenant une coque extérieure qui est au moins partiellement entourée d'eau lorsque le véhicule sous-marin est en fonctionnement, et un dispositif (20) pour recouvrir un récepteur acoustique sous-marin (22) du véhicule sous-marin, le dispositif présentant les caractéristiques suivantes :
une enveloppe (24) pour recevoir le récepteur acoustique sous-marin (22), l'enveloppe (24) ayant une fenêtre (30) dans une première zone, la fenêtre (30) étant adaptée pour laisser passer des ondes sonores, l'enveloppe étant reliée de manière étanche à l'eau à l'enveloppe extérieure ;
une soupape (26) qui est conçue pour permettre à l'eau entourant le dispositif (20) de s'écouler dans l'enveloppe (24) et pour empêcher l'eau présente dans l'enveloppe (24) de s'écouler hors de l'enveloppe (24) ;
un orifice de sortie (28) adapté pour permettre à l'eau présente dans l'enveloppe (24) de s'écouler lorsque l'eau s'écoule à travers la vanne (26) ;
de sorte qu'un échange d'eau a lieu dans l'enveloppe en raison de la pression plus élevée à l'extérieur de l'enveloppe qui se produit lors du déplacement du véhicule sous-marin par rapport à la pression hydrostatique dans l'enveloppe.

2. Le véhicule sous-marin (34) selon la revendication 1,
dans lequel la soupape est adaptée pour permettre à l'eau entourant le dispositif de s'écouler dans l'enveloppe lorsque la pression de l'eau entourant le dispositif est supérieure à la pression de l'eau dans l'enveloppe et pour empêcher l'eau présente dans l'enveloppe de s'écouler hors de l'enveloppe lorsque la pression de l'eau entourant le dispositif est inférieure à la pression de l'eau dans l'enveloppe.

3. Le véhicule sous-marin (34) selon l'une quelconque des revendications précédentes,
dans lequel la fenêtre comprend un premier matériau ayant une épaisseur de matériau inférieure à celle de l'enveloppe dans une seconde région à l'extérieur de la première région dans laquelle la fenêtre est disposée.

4. Le véhicule sous-marin (34) selon l'une quelconque des revendications précédentes,
dans lequel l'enveloppe comprend, dans une zone autour de la fenêtre, un second matériau qui est conçu pour résister à la pression de l'eau environnante.

5. Le véhicule sous-marin (34) selon l'une quelconque des revendications précédentes,
la vanne étant un clapet anti-retour.

6. Le véhicule sous-marin (34) selon l'une quelconque des revendications précédentes,
dans lequel la vanne est adaptée pour permettre à l'eau de s'écouler dans l'enveloppe lorsque la pression de l'eau entourant l'enveloppe est supérieure à la pression de l'eau dans l'enveloppe.

7. Le véhicule sous-marin (34) selon l'une quelconque des revendications précédentes,
dans lequel, dans l'orientation d'utilisation du dispositif, l'ouverture de sortie est située sur une face supérieure de l'enveloppe.

8. Le véhicule sous-marin (34) selon l'une quelconque des revendications précédentes,
la fenêtre occupant moins de 20% d'une surface totale de l'enveloppe.

9. Le véhicule sous-marin (34) selon l'une quelconque des revendications précédentes,
l'enveloppe comportant une autre fenêtre.

10. Le véhicule sous-marin (34) selon l'une des revendications précédentes avec un système (32) comprenant le dispositif selon l'une des revendications précédentes et le récepteur acoustique sous-marin, dans lequel le récepteur acoustique sous-marin est disposé dans la coque de telle sorte que les ondes sonores provenant de l'eau entourant le dispositif peuvent être reçues par le récepteur acoustique sous-marin à travers la fenêtre.

11. Le véhicule sous-marin (34) selon l'une quelconque des revendications précédentes, dans lequel la vanne est agencée de telle sorte qu'elle se trouve principalement sous la surface de l'eau lorsque le véhicule sous-marin est en fonctionnement.
